# EUROPEAN PATENT APPLICATION

(11) **EP 3 540 270 A1**
(43) Date of publication of application: **18.09.2019**
(21) Application number: 18161150.0
(22) Date of filing: 12.03.2018
(51) Int. Cl.: F16H 57/12, F16H 1/22, F16H 1/28, F16H 55/18, F02B 41/04, F02B 75/04

(54) **A GEAR TRAIN AND AN INTERNAL COMBUSTION ENGINE**

(71) Applicant: Gomecsys B.V., 1411 AR Naarden (NL)
(72) Inventor: De Gooijer, Lambertus Hendrik, 1401 EP Bussum (NL)
(74) Representative: De Vries & Metman

(57) **Abstract**

A gear train comprises a frame (3) and a first central gear (15), a first planet gear (16', 17', 31) and a second planet gear (18, 32), which are each rotatably mounted to the frame (3) and extend in a first plane. The first central gear (15) is drivably coupled to the first and second planet gear (16', 17', 18, 31, 32). The gear train further comprises a second central gear (12, 25), a third planet gear (16", 17", 28) and a fourth planet gear (22, 33), which are each rotatably mounted to the frame (3) and extend in a second plane being parallel to the first plane. The second central gear (12, 25) is drivably coupled to both the third and fourth planet gear (16'', 17", 22, 28, 33). The first and third planet gears (16', 16", 17', 17", 28, 31) are fixed to each other and rotatable with respect to the frame (3) about a common first axis of rotation. The second and fourth planet gears (18, 22, 32, 33) are resiliently coupled to each other and rotatable with respect to the frame (3) about a common second axis of rotation.

## Description

The present invention relates to a gear train, comprising a frame and a first central gear, a first planet gear and a second planet gear, which are each rotatably mounted to the frame and extend in a first plane, wherein the first central gear is drivably coupled to the first and second planet gear, the gear train further comprising a second central gear, a third planet gear and a fourth planet gear, which are each rotatably mounted to the frame and extend in a second plane being parallel to the first plane, wherein the second central gear is drivably coupled to both the third and fourth planet gear, wherein the first and third planet gears are fixed to each other and rotatable with respect to the frame about a common first axis of rotation.

Such a gear train is known from EP 2 620 614. The known gear train is part of a crankshaft of an internal combustion engine having variable compression ratio. The first central gear is fixed to a crank member including an eccentrically disposed bearing portion for bearing the big end of a connecting rod and the second central gear is fixed to an auxiliary shaft. The first and second central gears are drivably coupled to each other via two intermediate gears. A front part of one of the intermediate gear forms a first planet gear meshing with the first central gear and a rear part thereof forms a third planet gear meshing with the second central gear. Similarly, a front part of the other intermediate gear forms a second planet gear meshing with the first central gear and a rear part thereof forms a fourth planet gear meshing with the second central gear.

The present invention aims to provide an improved gear train.

For this purpose the second and fourth planet gears are resiliently coupled to each other and rotatable with respect to the frame about a common second axis of rotation.

This means that the first central gear and the second central gear are drivably coupled to each other through the first and third planet gears, whereas the resiliency between the second and fourth planet gears can create a pretension between the first and second central gears in order to compensate any backlash in the gear train. The resiliency may be formed by a spring, such as a torsion spring.

The gears may be external gears.

The first and second central gears may have a common central axis of rotation.

In an advantageous embodiment the first and third planet gears form a single integral gear so as to minimize manufacturing costs of the gear train.

In a particular embodiment the first central gear meshes with both the first and second planet gears, whereas the second central gear meshes with both the third and fourth planet gears. In this case the first and second central gears are directly coupled to the cooperating planet gears.

In an alternative embodiment the first central gear meshes with both the first and second planet gears, wherein the second central gear meshes with an external first reverse gear that meshes with the third planet gear and wherein the first central gear also meshes with an external second reverse gear that meshes with the fourth planet gear. In this case the second central gear is directly coupled to the cooperating planet gears, whereas the first central gear is indirectly coupled to the cooperating planet gears via the respective reverse gears.

The invention is also related to an internal combustion engine, comprising a gear train as described above in which the first and second central gears are directly coupled to the cooperating planet gears, wherein the frame is formed by a crankshaft, having a crankpin and being supported by a crankcase and rotatable with respect thereto about a crankshaft axis, a connecting rod including a big end and a small end, a piston being rotatably connected to the small end, a crank member being rotatably mounted on the crankpin and comprising at least a bearing portion having an outer circumferential wall which bears the big end of the connecting rod such that the connecting rod is rotatably mounted on the bearing portion of the crank member via the big end, wherein the crank member is provided with the first central gear, and wherein the first central gear is fixed to an auxiliary shaft which extends concentrically through the crankshaft, wherein the crankshaft and the auxiliary shaft are rotatable with respect to each other. In this case the rotational position of the auxiliary shaft with respect to the crankcase determines the rotational position of the crank member with respect to the crankshaft at a virtual standstill of the crankshaft. This means that when the bearing portion is disposed eccentrically with respect to the crankpin the compression ratio of the engine can be adjusted by varying the rotational position of the auxiliary shaft.

The invention is also related to an internal combustion engine, comprising a gear train as described above in which the second central gear is directly coupled to the cooperating planet gears, whereas the first central gear is indirectly coupled to the cooperating planet gears via the respective reverse gears, wherein the frame is formed by a crankshaft which is supported by a crankcase and rotatable with respect thereto about a crankshaft axis, wherein the crankshaft has a central main portion, a crankpin and a crank arm located between the central main portion and the crankpin as seen along the crankshaft axis, a connecting rod including a big end and a small end, a piston being rotatably connected to the small end, a crank member being rotatably mounted on the crankpin and comprising at least a bearing portion having an outer circumferential wall which bears the big end of the connecting rod such that the connecting rod is rotatably mounted on the bearing portion of the crank member via the big end, wherein the crank member has an external crank member gear which meshes with an external drive shaft gear which is fixed to a drive shaft that extends concentrically through the central main portion of the crankshaft and wherein one of the first and second central gear is mounted to the drive shaft and located at a side of the crank arm which is opposite to its side where the crankpin is located, wherein the other one of the first and second central gear is fixed to a control shaft which is rotatably mounted to the crankshaft and rotatable about the crankshaft axis. In this case the rotational position of the control shaft with respect to the crankcase determines the rotational position of the crank member with respect to the crankshaft at a virtual standstill of the crankshaft. This means that when the bearing portion is disposed eccentrically with respect to the crankpin the compression ratio of the engine can be adjusted by varying the rotational positon of the control shaft.

The invention will hereafter be elucidated with reference to the schematic drawings showing embodiments of the invention by way of example.
Fig. 1 is a perspective cut-away view of a part of an internal combustion engine comprising an embodiment of a gear train according to the invention.
Fig. 2 is a perspective sectional view of a part of the embodiment as shown in Fig. 1 on a larger scale.
Fig. 3 is a perspective view of a part of Fig. 2.
Figs. 4 and 5 are similar views as Fig. 3, but showing an alternative embodiment from different sides, respectively.

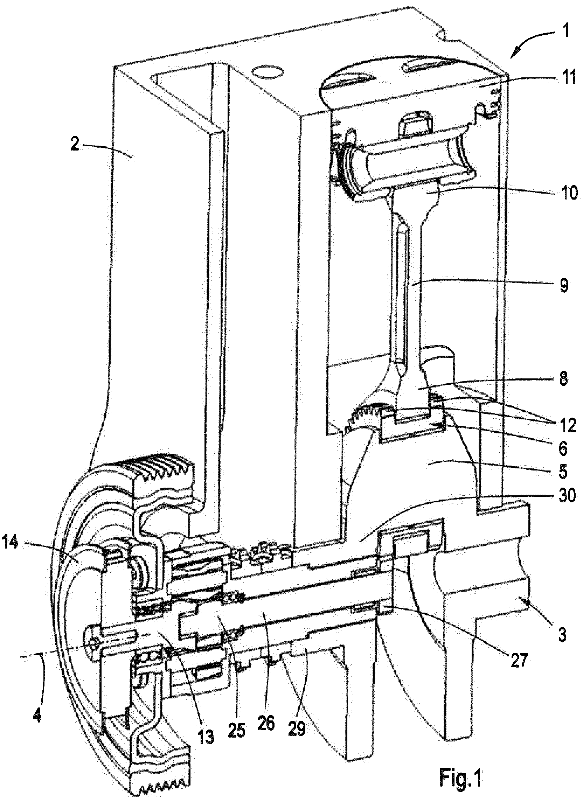

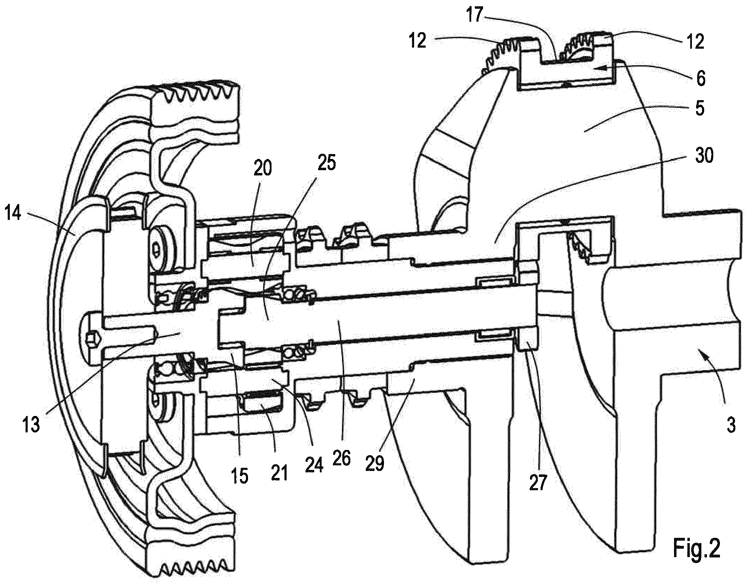

Fig. 1 shows a part of an internal combustion engine 1 which is provided with a gear train according to the invention. Fig. 2 shows details of the front part of the engine 1. The engine 1 is a four-stroke engine and has a variable compression ratio which provides the opportunity to operate the engine 1 at high compression ratio under part-load conditions resulting in improved efficiency. Under high-load conditions the compression ratio can be lowered in order to avoid knocking. The reciprocating piston mechanism of the engine 1 comprises a crankcase 2, which supports a crankshaft 3 by crankshaft bearings. The crankshaft 3 has a crankshaft axis 4 and is rotatable with respect to the crankcase 2 about the crankshaft axis 4. Furthermore, the crankshaft 3 comprises crankpins 5.

It is noted that in Fig. 1 the left side is a front side of the engine 1. At the opposite rear side of the engine 1 a flywheel (not shown) is fixed to the crankshaft 3. Although Fig. 1 shows a single cylinder the engine 1 may be a multicylinder engine. At the front side of the engine 1, the crankshaft 3 has a central main portion 29 of which a centreline coincides with the crankshaft axis 4. The central main portion 29 and the crankpin 5 are located at opposite sides of a crank arm 30.

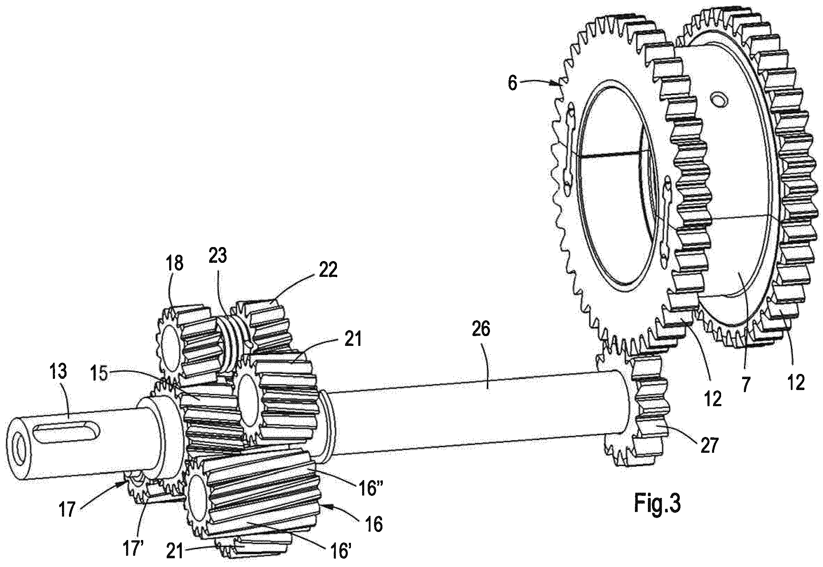

The engine 1 comprises a crank member 6 which is rotatably mounted on the crankpin 5. The crank member 6 is provided with a bearing portion 7 which is disposed eccentrically with respect to the crankpin 5, see Figs. 2 and 3. The bearing portion 7 has an outer circumferential wall which bears a big end 8 of a connecting rod 9. Thus, the connecting rod 9 is rotatably mounted on the crank member 6 via its big end 8. The connecting rod 9 also includes a small end 10 to which a piston 11 is rotatably connected.

The crank member 6 is provided with two external crank member gears 12 at both sides of the bearing portion 7. The crank member gear 12 located closest to the front side of the engine 1 is drivably coupled to a control shaft 13 for varying the rotational position of the crank member 6 at virtual standstill of the crankshaft 3 under operating conditions. This means that the crank member 6 can have different rotational positions with respect to the crankpin 5 when the piston 11 is in TDC. The control shaft 13 is rotatable with respect to the crankcase 2 about the crankshaft axis 4. The control shaft 13 has a fixed rotational position with respect to the crankcase 2 under operating conditions at fixed compression ratio. The control shaft 13 can be turned by means of a pulley 14, but numerous alternative driving means are conceivable. The other crank member gear 12 of the crank member 6 is drivably coupled to a next crank member at a next crankpin (which are not shown in the drawings), in order to force all crank members of the engine 1 to be operated similarly.

The control shaft 13 is provided with an external control gear 15. The control gear 15 meshes with front portions 16', 17' of two external intermediate gears 16, 17 and an external first separate intermediate gear 18. The control gear 15 and the front portions 16', 17' of the gears 16, 17 and the first separate intermediate gear 18 are mutually engaged within a first imaginary plane and rotatably mounted on respective intermediate gear shafts 20, which have fixed positions with respect to the crankshaft 3, see Fig. 2. Rear portions 16", 17" of the intermediate gears 16 and 17 and an external second separate intermediate gear 22 mesh with respective external reverse gears 21. The second separate intermediate gear 22 and the first separate intermediate gear 18 are resiliently coupled to each other through a spring 23. The reverse gears 21 are rotatably mounted on respective reverse gear shafts 24 which have fixed positions with respect to the crankshaft 3. The reverse gears 21 mesh with a transfer gear 25, which is fixed to a drive shaft 26. The transfer gear 25 and the rear portions 16'', 17'' of the intermediate gears 16, 17 and the second separate intermediate gear 22 are mutually engaged within a second imaginary plane which extends parallel to the first imaginary plane. The drive shaft 26 extends concentrically through the central main portion 29 of the crank shaft 3 and comprises an external drive shaft gear 27 which meshes with the crank member gear 12 that is located closest to the front side of the engine 1. The spring 23 may be biased in order to avoid adverse backlash effects of the gear train.

Each of the intermediate gears 16 and 17 is a single integral gear in the embodiment as shown in Figs. 2 and 3. Nevertheless, the front portions 16', 17' that mesh with the control gear 15 may be different from the rear portions 16", 17" that mesh with the reverse gears 21, but they are always fixed to each other.

Preferably the dimensions of the gears 12, 15, 16, 17, 18, 21, 22, 25 and 27 are selected such that when the control shaft 13 has a fixed position with respect to the crankcase 2 under operating conditions at fixed compression ratio, the crank member 6 rotates at a rotation frequency with respect to the crankcase 2 which is half of that of the crankshaft 3 and in the same rotational direction as the crankshaft 3 as seen from the crankcase 2. In other words, under the conditions as mentioned above, the crank member 6 rotates about the crankpin 5 in opposite rotational direction of the crankshaft 3 and at a rotation frequency which is half of that of the crankshaft 3.

It is noted that in the embodiment as shown in Figs. 1-3 the gear train according to the invention is formed by the crankshaft 3, the control gear 15 being a first central gear, the front portions 16' or 17' of the gears 16 or 17 each being a first planet gear, the first separate intermediate gear 18 being a second planet gear, the transfer gear 25 being a second central gear, the rear portions 16" or 17" of the gears 16 or 17 each being a third planet gear and the second separate intermediate gear 22 being a fourth planet gear 22.

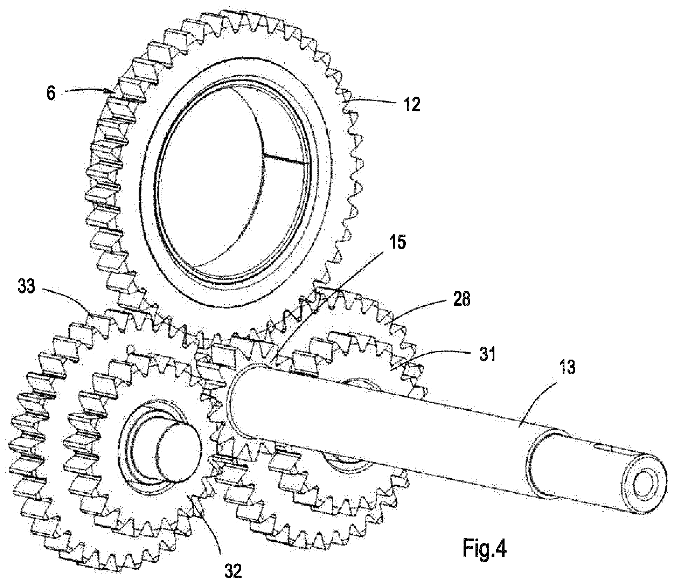

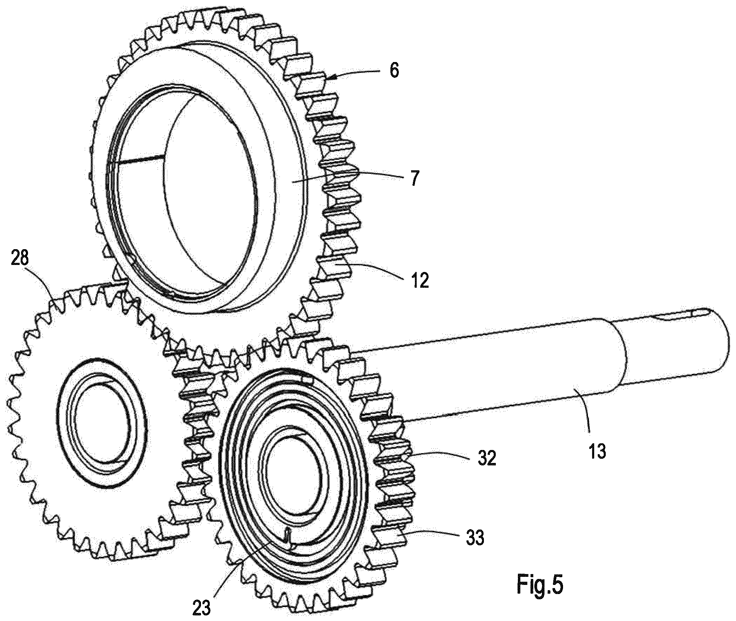

Figs. 4 and 5 show an alternative embodiment of a gear train for an internal combustion which has a variable compression ratio. Parts that are similar to the embodiment as described hereinbefore are referred to by the same reference sign. This embodiment is also provided with a control shaft 13 but in this case it extends concentrically through the main portion 29 of the crankshaft 3, whereas the control gear 15 is now located at a side of the crank arm 30 of the crankshaft 3 where the crankpin 5 is located.

The control gear 15 meshes with two external intermediate gears 31 and 32, which form a first and second planet gear according to the invention, respectively. The control gear 15 and the intermediate gears 31 and 32 are mutually engaged within a first imaginary plane. One intermediate gear 31 is fixed to a third planet gear 28 which meshes with the crank member gear 12, whereas a separate intermediate gear 33, being a fourth planet gear, meshes with the crank member gear 12, as well. The separate intermediate gear 33 and the other intermediate gear 32 are resiliently coupled to each other through the spring 23. The spring 23 may be biased in order to avoid adverse backlash effects of the gear train. The third planet gear 28, the separate intermediate gear 33 and the crank member gear 12 are mutually engaged within a second imaginary plane which extends parallel to the first imaginary plane. It is noted that axes of rotation of the control gear 15, being the first central gear, and the crank member gear 12, being the second central gear, do not coincide in this embodiment, but they extend parallel to each other.

Similar to the embodiment as described above the dimensions of the gears 12, 15, 31, 32, 28 and 33 can be selected such that when the control shaft 13 has a fixed position with respect to the crankcase 2 under operating conditions at fixed compression ratio, the crank member 6 rotates at a rotation frequency with respect to the crankcase 2 which is half of that of the crankshaft 3 and in the same rotational direction as the crankshaft 3 as seen from the crankcase 2.

From the foregoing, it will be clear that the invention provides a reciprocating piston mechanism which minimizes adverse backlash effects in the gear train.

The invention is not limited to the embodiments shown in the drawings and described hereinbefore, which may be varied in different manners within the scope of the claims and their technical equivalents.

## Claims

1. A gear train, comprising a frame (3) and a first central gear (15), a first planet gear (16', 17', 31) and a second planet gear (18, 32), which are each rotatably mounted to the frame (3) and extend in a first plane, wherein the first central gear (15) is drivably coupled to the first and second planet gear (16', 17', 18, 31, 32), the gear train further comprising a second central gear (12, 25), a third planet gear (16", 17", 28) and a fourth planet gear (22, 33), which are each rotatably mounted to the frame (3) and extend in a second plane being parallel to the first plane, wherein the second central gear (12, 25) is drivably coupled to both the third and fourth planet gear (16", 17", 22, 28, 33), wherein the first and third planet gears (16', 16", 17', 17'', 28, 31) are fixed to each other and rotatable with respect to the frame (3) about a common first axis of rotation, **characterized in that** the second and fourth planet gears (18, 22, 32, 33) are resiliently coupled to each other and rotatable with respect to the frame (3) about a common second axis of rotation.

2. A gear train according to claim 1, wherein said gears are external gears.

3. A gear train according to claim 1 or 2, wherein the first and second central gears (15, 25) have a common central axis of rotation.

4. A gear train according to one of the preceding claims, wherein the first and third planet gears (16', 16", 17', 17'') form a single integral gear (16, 17).

5. A gear train according to one of the preceding claims, wherein the first central gear (15) meshes with both the first and second planet gears (31, 32) and wherein the second central gear (12) meshes with both the third and fourth planet gears (28, 33).

6. A gear train according to one of the claims 1-4, wherein the first central gear (15) meshes with both the first and second planet gears (16', 17', 18), wherein the second central gear (25) meshes with an external first reverse gear (21) that meshes with the third planet gear (16'', 17") and wherein the first central gear (25) also meshes with an external second reverse gear (21) that meshes with the fourth planet gear (22).

7. An internal combustion engine, comprising a gear train according to claim 5, wherein the frame is formed by a crankshaft (3), having a crankpin (5) and being supported by a crankcase (2) and rotatable with respect thereto about a crankshaft axis (4), a connecting rod (9) including a big end (8) and a small end (10), a piston (11) being rotatably connected to the small end (10), a crank member (6) being rotatably mounted on the crankpin (5) and comprising at least a bearing portion (7) having an outer circumferential wall which bears the big end (8) of the connecting rod (9) such that the connecting rod (9) is rotatably mounted on the bearing portion (7) of the crank member (6) via the big end (8), wherein the crank member (6) is provided with the second central gear (12), and wherein the first central gear (15) is fixed to an auxiliary shaft (13) which extends concentrically through the crankshaft (3), wherein the crankshaft (3) and the auxiliary shaft (13) are rotatable with respect to each other.

8. An internal combustion engine, comprising a gear train according to claim 6, wherein the frame is formed by a crankshaft (3) which is supported by a crankcase (2) and rotatable with respect thereto about a crankshaft axis (4), wherein the crankshaft (3) has a central main portion (29), a crankpin (5) and a crank arm (30) located between the central main portion (29) and the crankpin (5) as seen along the crankshaft axis (4), a connecting rod (9) including a big end (8) and a small end (10), a piston (11) being rotatably connected to the small end (10), a crank member (6) being rotatably mounted on the crankpin (5) and comprising at least a bearing portion (7) having an outer circumferential wall which bears the big end (8) of the connecting rod (9) such that the connecting rod (9) is rotatably mounted on the bearing portion (7) of the crank member (6) via the big end (8), wherein the crank member (6) has an external crank member gear (12) which meshes with an external drive shaft gear (27) which is fixed to a drive shaft (26) that extends concentrically through the central main portion (29) of the crankshaft (3) and wherein one of the first and second central gear (25) is mounted to the drive shaft (26) and located at a side of the crank arm (30) which is opposite to its side where the crankpin (5) is located, wherein the other one of the first and second central gear (15) is fixed to a control shaft (13) which is rotatably mounted to the crankshaft (3) and rotatable about the crankshaft axis (4).
